# EUROPEAN PATENT APPLICATION

(11) **EP 3 869 750 A1**
(43) Date of publication of application: **25.08.2021**
(21) Application number: 18938150.2
(22) Date of filing: 07.12.2018
(51) Int. Cl.: H04L 12/721, H04L 12/759

(54) **DATA TRAFFIC TRANSMISSION METHOD AND APPARATUS**

(30) Priority: 25.10.2018 CN 201811251184
(71) Applicant: Wangsu Science & Technology Co., Ltd., Shanghai 201800 (CN)
(72) Inventor: CHEN, Kailin, Shanghai 201800 (CN)
(74) Representative: De Arpe Tejero, Manuel
(86) International application number: PCT/CN2018/119885
(87) International publication number: WO 2020/082522

(57) **Abstract**

The present disclosure provides a method and a device for transmitting data traffic, which belongs to a data transmission technical field. The method includes detecting network transmission quality of all transmission paths reaching a target server by an entry proxy device; selecting and recording a plurality of alternative transmission paths from the all transmission paths by the entry proxy device according to the network transmission quality; when receiving data traffic directed to the target server, selecting a target transmission path from a plurality of recorded transmission paths by the entry proxy device according to a client identifier carried by the data traffic; and transmitting the data traffic through the target transmission path by the entry proxy device. By adopting the disclosure, when a client performs multiple interactions with a server through an application acceleration network in a short time period, the probability of source IP consistency of the data traffic reaching the server may be greatly improved, thereby ensuring the network transmission quality of the application acceleration network.

## Description

### FIELD OF THE DISCLOSURE

The present disclosure generally relates to the technical field of data transmission and, more particularly, relates to a method and a device for transmitting data traffic.

### BACKGROUND

An application acceleration network is a network deployed between a client and a server to accelerate data transmission. When the client sends data traffic to the server through the application acceleration network, the data traffic may be sent to an entry acceleration node of the application acceleration network, and the entry acceleration node may select one transmission path to transmit the above-mentioned data traffic in a plurality of transmission paths that reach the server in the application acceleration network.

In a specific implementation, when the entry acceleration node receives the data traffic directed to the server each time, the data traffic may be transmitted through a determined optimal transmission path, and the optimal transmission path may be re-selected simultaneously from the above-mentioned plurality of transmission paths according to network state parameters (including a transmission delay, a transmission packet loss rate, an acceleration node load, a path bandwidth usage rate, and the like) from the acceleration node to the server, which may be used for the transmission of subsequent data traffic.

In the process of implementing the present disclosure, the inventors have found that the existing technology has at least following problems.

One entry acceleration node may include a plurality of entry proxy devices, and the data traffic may be evenly distributed to different entry proxy devices when reaching the entry acceleration node. Due to problems such as detection time, equipment operation states, detected data errors, and the like, detection results of different entry proxy devices for the optimal transmission path to a same destination address may be deviated. In such way, for some servers that require source IP addresses of the data traffic to be unchanged during multiple interactions (i.e., a service backend of online banking, a service backend of payment application, and the like), the data traffic transmitted by different entry proxy devices in a same entry acceleration node may be likely to be determined as illegal data or invalid data by the server, thereby affecting the network transmission quality of the application acceleration network.

### BRIEF SUMMARY OF THE DISCLOSURE

In order to solve problems in the existing technology, embodiments of the present disclosure provide a method and a device for transmitting data traffic, and the technical solutions may be the following.

One aspect of the present application provides a method for transmitting data traffic. The method may include:
detecting network transmission quality of all transmission paths reaching a target server by an entry proxy device;
selecting and recording a plurality of alternative transmission paths from the all transmission paths by the entry proxy device according to the network transmission quality;
when receiving data traffic directed to the target server, selecting a target transmission path in a plurality of recorded transmission paths by the entry proxy device according to a client identifier carried by the data traffic; and
transmitting the data traffic through the target transmission path by the entry proxy device.

Optionally, detecting the network transmission quality of the all transmission paths reaching the target server by the entry proxy device includes:
detecting network state parameters of each transmission path reaching the target server, where the network state parameters at least include a transmission delay, a transmission packet loss probability, and a load and bandwidth usage rate of all node devices on the transmission path; and
determining a network transmission quality value of each transmission path according to the network state parameters, a preset threshold corresponding to each network state parameter and a quality impact weight corresponding to each network state parameter.

Optionally, selecting the plurality of alternative transmission paths from the all transmission paths by the entry proxy device according to the network transmission quality includes:
sorting the all transmission paths according to network transmission quality values from high to low by the entry proxy device, and selecting a preset number of alternative transmission paths that are ranked first; or
determining transmission paths which have higher network transmission quality values than a preset quality threshold in the all transmission paths as the alternative transmission paths by the entry proxy device; or
determining transmission paths, where a difference between the network transmission quality value and a maximum network transmission quality value in the all transmission paths is within a preset deviation range, as the alternative transmission paths by the entry proxy device.

Optionally, when receiving the data traffic directed to the target server, selecting the target transmission path in the plurality of transmission paths by the entry proxy device according to the client identifier carried by the data traffic includes:
performing a hashing calculation on the client identifier carried by the data traffic to obtain a target hash value by the entry epoxy device when receiving the data traffic directed to the target server; and
selecting the target transmission path from the plurality of alternative transmission paths by the entry epoxy device according to the target hash value and the path identifier corresponding to each alternative transmission path.

Optionally, when receiving the data traffic directed to the target server, selecting the target transmission path in the plurality of transmission paths by the entry proxy device according to the client identifier carried by the data traffic includes:
performing a hashing calculation on the client identifier carried by the data traffic to obtain a target hash value by the entry epoxy device when receiving the data traffic directed to the target server;
determining a target exit acceleration node by the epoxy device according to the target hash value and a node identifier corresponding to an exit acceleration node on each alternative transmission path; and
selecting the target transmission path having a highest network transmission quality in the all alternative transmission paths passing through the target exit acceleration node by the entry epoxy device.

Optionally, after selecting the target transmission path from the plurality of alternative transmission paths, the method further includes:
if the network transmission quality of the target transmission path is within a preset critical quality range, sending a target path identifier of the target transmission path to other entry proxy devices of an entry acceleration node which the entry proxy device belongs to, such that the target transmission path is selected according to the target path identifier when other proxy devices transmit the data traffic directed to the target server within a preset duration.

Optionally, selecting the plurality of alternative transmission paths from the all transmission paths by the entry proxy device according to the network transmission quality includes:
if the target server has a source IP address consistency requirement, selecting the plurality of alternative transmission paths from the all transmission paths according to the network transmission quality.

Another aspect of the present application provides a device for transmitting data traffic. The device may include:
a detection module, configured to detect network transmission quality of all transmission paths reaching a target server;
a first selection module, configured to select and record a plurality of alternative transmission paths from the all transmission paths according to the network transmission quality;
a second selection module, configured to select a target transmission path from a plurality of recorded alternative transmission paths according to a client identifier carried by the data traffic when receiving data traffic directed to the target server; and
a transmission module, configured to transmit the data traffic according to the target transmission path.

Optionally, the detection module is specifically configured to:
detect network state parameters of each transmission path reaching the target server, where the network state parameters at least include a transmission delay, a transmission packet loss probability, and a load and bandwidth usage rate of all node devices on the transmission path; and
determine a network transmission quality value of each transmission path according to the network state parameters, a preset threshold corresponding to each network state parameter and a quality impact weight corresponding to each network state parameter.

Optionally, the first selection module is specifically configured to:
sort the all transmission paths according to the network transmission quality values from high to low, and select a preset number of alternative transmission paths that are ranked first; or
determine transmission paths which have higher network transmission quality values than a preset quality threshold in the all transmission paths as the alternative transmission paths; or
determine transmission paths, where a difference between the network transmission quality value and a maximum network transmission quality value in the all transmission paths is within a preset deviation range, as the alternative transmission paths.

Optionally, the second selection module is specifically configured to:
perform a hashing calculation on the client identifier carried by the data traffic to obtain a target hash value when receiving the data traffic directed to the target server; and
select the target transmission path from the plurality of alternative transmission paths according to the target hash value and a path identifier corresponding to each alternative transmission path.

Optionally, the second selection module is specifically configured to:
perform a hashing calculation on the client identifier carried by the data traffic to obtain a target hash value when receiving the data traffic directed to the target server;
determine a target exit acceleration node according to the target hash value and a node identifier corresponding to an exit acceleration node on each alternative transmission path; and
select the target transmission path having a highest network transmission quality from all alternative transmission paths passing through the target exit acceleration node.

Optionally, the device further includes:
a sending module, configured to, if the network transmission quality of the target transmission path is within a preset critical quality range, send a target path identifier of the target transmission path to other entry proxy devices of an entry acceleration node which an entry proxy device belongs to, such that the target transmission path is selected according to the target path identifier when other proxy devices transmit the data traffic directed to the target server within a preset duration.

Optionally, the first selection module is specifically configured to:
if the target server has a source IP address consistency requirement, select the plurality of alternative transmission paths from the all transmission paths according to the network transmission quality.

Another aspect of the present application provides an entry proxy device. The entry proxy device may include a processor and a memory, where the memory stores at least one instruction, and at least one program segment, a code set or an instruction set, and the at least one instruction, the at least one program segment, the code set or the instruction set is loaded and executed by the processor to implement the above-mentioned method for transmitting data traffic.

Another aspect of the present application provides a computer readable storage medium. The storage medium may store at least one instruction, at least one program segment, a code set or an instruction set; and the at least one instruction, the at least one program segment, the code set or the instruction set is loaded and executed by a processor to implement the above-mentioned method for transmitting data traffic.

The technical solutions provided by the embodiments of the present disclosure may have the following beneficial effects.

In the embodiments of the present disclosure, the entry proxy device may detect the network transmission quality of all transmission paths reaching the target server; the entry proxy device may select and record the plurality of alternative transmission paths from all transmission paths according to the network transmission quality; when receiving the data traffic directed to the target server, the entry proxy device may select the target transmission path from the plurality of recorded alternative transmission paths according to the client identifier carried by the data traffic; and the entry proxy device may transmit the data traffic through the target transmission path. In such way, by selecting the plurality of alternative transmission paths, the selection condition of the transmission path may be relaxed, so the plurality of alternative transmission paths selected by different entry proxy devices of a same entry acceleration node in a short time period may have a high probability to be same; and then by locking the actually used transmission path through the client identifier, it may ensure that, for the data traffic of a same client, different entry proxy devices may select the transmission paths which meet the source IP address consistency requirement within the same alternative range, thereby ensuring the network transmission quality of the overall application acceleration network.

### BRIEF DESCRIPTION OF THE DRAWINGS

In order to clearly illustrate the technical solutions in the embodiments of the present disclosure, the accompanying drawings, which are needed to be used in the description of the disclosed embodiments, are briefly described hereinafter. Obviously, the drawings in the following description are merely some embodiments of the present disclosure. Other drawings derived from such drawings may be obtained by those skilled in the art without creative work.
FIG. 1 illustrates a structural schematic of a scenario for transmitting data traffic according to embodiments of the present disclosure;
FIG. 2 illustrates a flow chart of a method for transmitting data traffic according to embodiments of the present disclosure;
FIG. 3 illustrates a structural schematic of a device for transmitting data traffic according to embodiments of the present disclosure;
FIG. 4 illustrates a structural schematic of a device for transmitting data traffic according to embodiments of the present disclosure; and
FIG. 5 illustrates a structural schematic of an entry proxy device according to embodiments of the present disclosure.

### DETAILED DESCRIPTION

To more clearly describe the objectives, technical solutions and advantages of the present disclosure, the present disclosure is further illustrated in detail with reference to the accompanying drawings in conjunction with embodiments.

The present application provides a method for transmitting data traffic. The execution entity of the method may be any entry proxy device in an entry acceleration node of an application acceleration network. The application acceleration network may be composed of a plurality of acceleration nodes. The acceleration nodes may mainly be divided entry acceleration nodes, intermediate acceleration nodes and exit acceleration nodes.

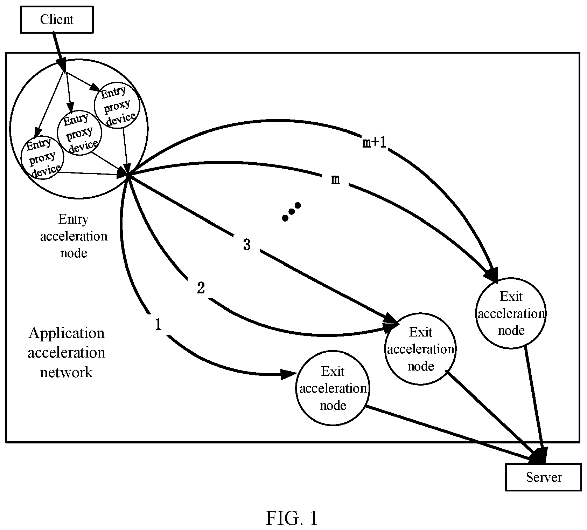

The entry acceleration nodes may be network nodes used for receiving data traffic sent by a client to a server. Each entry acceleration node may include a plurality of entry proxy devices. The plurality of entry proxy devices may process the client traffic transmission arriving the entry acceleration node in a balanced manner. Each entry proxy device may transmit the received data traffic of the client to a last acceleration node (i.e., an exit acceleration node) through one or more levels intermediate acceleration nodes in the application acceleration network according to a preset transmission path (the intermediate acceleration nodes may not exist in the transmission path), and then the data traffic may be sent to a receiver by the exit acceleration node. FIG. 1 illustrates a structural schematic of a scenario for transmitting data traffic.

When transmitting the data traffic, the entry proxy device may also detect all transmission paths reaching the server in the application acceleration network, and select or modify the preset transmission path according to detection results, thereby ensuring that the preset transmission path may always be a path with desirable network transmission quality.

The entry proxy device may include a processor, a memory, and a transceiver. The processor may be used to process data traffic transmission in the following procedure. The memory may be used to store required data and generated data during the storage process, such as alternative transmission paths, path identifiers, node identifiers, and the like. The transceiver may be used to receive and send related data during the process, such as receiving data traffic, sending probe messages, and the like.

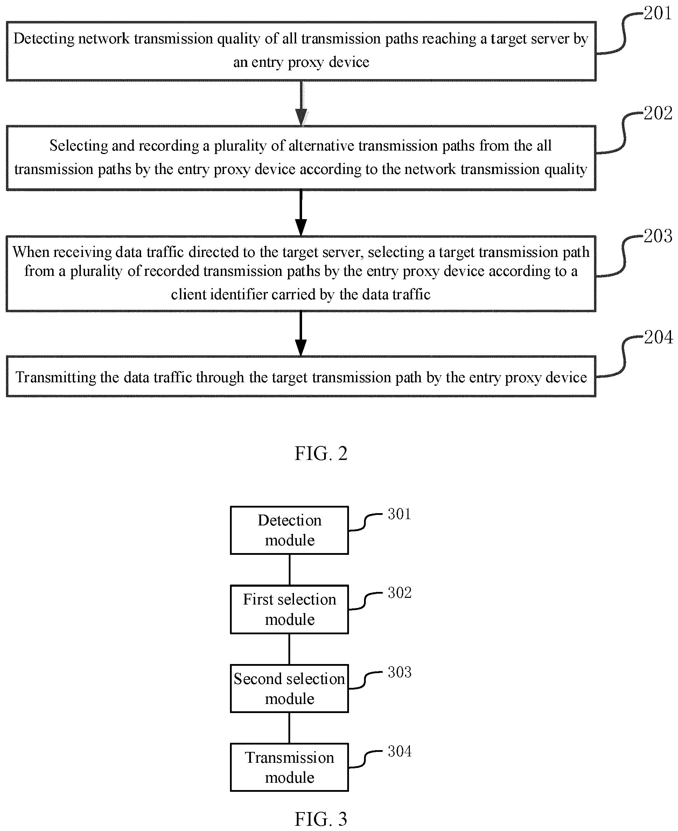

The processing procedure shown in FIG. 2 is described in detail in conjunction with specific embodiments in the following.

In step 201, the entry proxy device may detect network transmission quality of all transmission paths reaching a target server.

In one embodiment, the entry proxy device in the operating state may detect the network transmission quality of the transmission paths reaching each server according to a preset detection trigger mechanism. Take the target server as an example, when detecting the transmission paths reaching the target server each time, the entry proxy device may first determine all transmission paths reaching the target server, and then detect the network transmission quality of the transmission paths through a manner of sending detection messages to the target server. The preset detection trigger mechanism may vary, which is not specifically limited in one embodiment. For example, the detection may be triggered periodically according to a preset interval duration (e.g., one detection for every 1 minute); the detection may also be triggered according to the visit situation of the target server (if the visit popularity of the target server reaches a preset threshold within a preset duration, the detection may be triggered); and the time for triggering the detection may be further determined by historical network transmission quality of each transmission path (if the network transmission quality of the transmission paths is detected to have a relatively large fluctuation for multiple times, the detection trigger interval may be shortened, and if the network transmission quality of the transmission paths is detected to a have relatively small fluctuation for multiple times, the detection trigger interval may be expanded).

Optionally, the detected network transmission quality may be represented by a value calculated by a plurality of network state parameters. Correspondingly, the process of step 201 may be the following: the entry proxy device may detect the network state parameters of each transmission path reaching the target server; and the entry proxy device may determine the network transmission quality value according to the network state parameters, a preset threshold corresponding to each network state parameter and a quality impact weight corresponding to each network state parameter.

The network state parameters may at least include a transmission delay, a transmission packet loss probability, and a load and bandwidth usage rate of all node devices on the transmission path.

In the implementation, for each transmission path reaching the target server, the entry proxy device may detect current network state parameters of each transmission path in the process of detecting the network transmission quality, and the network state parameters may at least include a transmission delay, a packet loss probability, and a load and bandwidth usage rate of all node devices on the transmission path. The network state parameters may be pre-selected by technicians, which may effectively reflect the network transmission quality of the transmission path. At the same time, each network state parameter may respectively correspond to the preset threshold and the quality impact weight. The transmission path may be used to transmit data traffic only when the network state parameter is greater than the corresponding preset threshold, and the quality impact weight may numerically reflect the impact of each network state parameter on the network transmission quality. Therefore, after detecting the network state parameters of each transmission path, the entry proxy device may determine the network transmission quality value of each transmission path according to the network state parameters, the preset threshold corresponding to each network state parameter and the quality impact weight corresponding to each network state parameter. Specifically, each network state parameter of a transmission path may be respectively subtracted from the corresponding preset threshold, and an obtained difference may be respectively multiplied by the corresponding quality impact weight, and then all multiplication products may be added to obtain the transmission quality value of the transmission path. In such way, the network transmission quality of each transmission path may be determined more intuitively, conveniently and accurately by the plurality of network state parameters through the numerical parameter method.

In step 202, the entry proxy device may select and record a plurality of alternative transmission paths in all transmission paths according to the network transmission quality.

In one embodiment, after detecting the network transmission quality of all transmission paths reaching the target server, the entry proxy device may select the plurality of alternative transmission paths from all transmission paths according to the detected network transmission quality and perform corresponding recordings. Therefore, before obtaining a next detection result, the data traffic directed to the target server may be transmitted through one or more transmission paths in the alternative transmission paths. It should be understood that, in order to ensure the transmission quality of subsequent data traffic, the plurality of alternative transmission paths may be a plurality of transmission paths having the highest network transmission quality in all transmission paths.

Optionally, based on the above-mentioned process of the numerical network transmission quality, selecting the alternative transmission paths in step 202 may have the following methods.

For the first method, the entry proxy device may sort all transmission paths according to the network transmission quality values from high to low and select a preset number of alternative transmission paths that are ranked first.

In the implementation, after detecting the network transmission quality values of all transmission paths, the entry proxy device may sort the plurality of transmission paths according to the network transmission quality values from high to low, and then select the preset number of transmission paths that are ranked first as the alternative transmission paths. In such way, the number of alternative transmission paths selected each time may be consistent, which may facilitate subsequent management and selection of the alternative transmission paths.

For the second method, the entry proxy device may determine transmission paths which have higher network transmission quality values than the preset quality threshold in all transmission paths as the alternative transmission paths.

In the implementation, after detecting the network transmission quality values of all transmission paths, the entry proxy device may select transmission paths which have higher network transmission quality values than the preset quality threshold, and such transmission paths may be determined as the alternative transmission paths. In such way, by using the preset quality threshold as a selecting condition, the network quality of the selected transmission paths may be ensured to be desirable.

For the third method, the entry proxy device may determine transmission paths, where a difference between the network transmission quality value and a maximum network transmission quality value in all transmission paths is within a preset deviation range, as the alternative transmission paths.

In the implementation, after detecting the network transmission quality values of all transmission paths, the entry proxy device may determine the maximum network transmission quality value in the network transmission quality values of the plurality of transmission paths, and then select the transmission paths, where the difference between the network transmission quality value and the maximum network transmission quality value is within the preset deviation range, as the alternative transmission paths, thereby ensuring that the alternative transmission paths, which are available and with a desirable network transmission quality, may be selected under all circumstances.

In step 203, when receiving the data traffic directed to the target server, the entry proxy device may select a target transmission path in a plurality of recorded transmission paths according to a client identifier carried by the data traffic.

In the implementation, when the client sends the data traffic to the target server through the application acceleration network, an entry proxy device in the entry acceleration node connected to the target server in the application acceleration network may receive the above-mentioned data traffic directed to the target server and obtain the client identifier carried by the data traffic. The client identifier may be an identifier that is obtained by the entry proxy device and used to distinguish different identifiers. Specifically, the client identifier may be an IP address of the client, a device code of the client, or a client account for logging into the client, and the like. Then, the entry proxy device may inquire the plurality of alternative transmission paths which are recorded locally and directed to the target server and select one target transmission path for transmitting current data traffic from the plurality of recorded alternative transmission paths according to the client identifier carried by the data traffic.

Optionally, the target transmission path is selected based on that each transmission path may have a unique identifier. Correspondingly, the process of step 203 may be the following: when receiving the data traffic directed to the target server, a hashing calculation may be performed on the client identifier carried by the data traffic by the entry proxy device to obtain a target hash value; and the target transmission path may be selected from the plurality of alternative transmission paths by the entry proxy device according to the target hash value and the identifier corresponding to each alternative transmission path.

In the implementation, after receiving the data traffic directed to the target server, the client identifier carried by the data traffic may be obtained by the entry proxy device, and the hashing calculation may be performed on the client identifier to obtain the target hash value. Thereafter, the target transmission path may be selected from the plurality of alternative transmission paths by the entry proxy device according to the target hash value and the identifier corresponding to each alternative transmission path. Specifically, a transmission path, where the path identifier is closest to the target hash value, in the plurality of alternative transmission paths may be selected as the target transmission path. Of course, manners for selecting the target transmission path using the above-mentioned target hash value and path identifier may be various, which may not be limited in one embodiment. In such way, for data traffic sent by a same client in a short time period, the traffic data may have a high probability to be transmitted by the entry proxy device through a same transmission path.

Optionally, the target transmission path may be selected based on a node identifier of the exit acceleration node of each transmission path. Correspondingly, the process of step 203 may be the following: when receiving the data traffic directed to the target server, a hashing calculation may be performed on the client identifier carried by the data traffic by the entry proxy device to obtain a target hash value; a target exit acceleration node may be determined by the entry proxy device according to the target hash value and the node identifier corresponding to the exit acceleration node on each alternative transmission path; and the target transmission path having the highest network transmission quality may be selected by the entry proxy device from all alternative transmission paths passing through the target exit acceleration node.

In the implementation, when receiving the data traffic directed to the target server, the client identifier carried by the data traffic may be obtained by the entry proxy device, and the hashing calculation may be performed on the client identifier to obtain the target hash value. Thereafter, the target exit acceleration node may be determined by the entry proxy device according to the target hash value and the node identifier corresponding to the exit acceleration node on each alternative transmission path. Specifically, an exit acceleration node, where the node identifier is closest to the target hash value, in all exit acceleration nodes included in the plurality of alternative transmission paths may be selected as the target exit acceleration node. Of course, manners for selecting the target exit acceleration node using the above-mentioned target hash value and node identifier may be various, which may not be limited in one embodiment. Furthermore, the target transmission path, which passes through the above-mentioned target exit acceleration node and has the highest network transmission quality, may be selected by the entry proxy device from the plurality of alternative transmission paths. In such way, for data traffic sent by a same client in a short time period, the data traffic may have a high probability to be transmitted to the server through a same exit acceleration node.

In step 204, the entry proxy device may transmit data traffic through the target transmission path.

In the implementation, after selecting the target transmission path from the plurality of alternative transmission paths directed to the target server, the entry proxy device may send the current received data traffic, directed to the target server, to the target server through the target transmission path. Moreover, after transmitting the data traffic, the entry proxy device may also store the path identifier and the client identifier of the target transmission path correspondingly and may configure a certain storage duration. In such way, if the entry proxy device receives data traffic which carries the same client identifier and is also directed to the target server again during the storage duration, the target transmission path may be directly selected to transmit the data traffic. It should be noted that the current transmission may not update the storage duration corresponding to the above-mentioned path identifier and client identifier.

Optionally, if the selected target transmission path may not be referred to as the alternative transmission path at a next detection, the corresponding path identifier may be broadcasted, and the corresponding processing may be the following. If the network transmission quality of the target transmission path is within a preset critical quality range, the entry proxy device may send the target path identifier of the target transmission path to the other entry proxy devices of the entry acceleration node which the entry proxy device belongs to, so the target transmission path may be selected according to the target path identifier when other proxy devices transmit the data traffic directed to the target server within the preset duration.

In the implementation, after the entry proxy device selects the target transmission path from the plurality of alternative transmission paths, if the network transmission quality of the target transmission path is found to be within the preset critical quality range, that is, the target transmission path may not be detected when the detection is performed again in the case that the detection result may have a certain degree of deviation, the entry proxy device may send the target path identifier of the target transmission path to the other entry proxy devices of the entry acceleration node which the entry proxy device belongs to. The specific sending manner may be in the form of broadcast. In such way, after the other proxy devices obtain the above-mentioned target path identifier, if the data traffic directed to the target server is required to be transmitted within the preset duration, the target transmission path may be selected according to the above-mentioned target path identifier. It may not be difficult to understand that, the transmission paths, where the network transmission quality is within the present critical quality range, may be likely to be excluded when other entry proxy devices selects the alternative transmission paths after detection. Therefore, when the transmission paths are selected based on the client identifiers, selected transmission paths may not be kept the same.

Optionally, the data traffic of different servers may be distinguished. Correspondingly, the process of step 202 may be the following: if the target server has a source IP address consistency requirement, the entry proxy device may select the plurality of alternative transmission paths from all transmission paths according to the network transmission quality.

In the implementation, the entry proxy device may record a list of servers having the source IP address consistency requirement. The list may be preset on the entry proxy device by technicians, and each server in the list may require the source address consistency of the data traffic of a same client in a short time period. Furthermore, after detecting the network transmission quality of all transmission paths reaching the target server, the entry proxy device may determine whether the target server has the source IP address consistency requirement according to the list. If the target server has the source IP address consistency requirement, the entry proxy device may select the plurality of alternative transmission paths from all transmission paths according to the network transmission quality. If the target server does not have the source IP address consistency requirement, the entry proxy device may select the transmission path having the highest network transmission quality from all transmission paths, and subsequently use the transmission path to transmit the data traffic directed to the target server.

In one embodiment of the present disclosure, the entry proxy device may detect the network transmission quality of all transmission paths reaching the target server; the entry proxy device may select and record the plurality of alternative transmission paths from all transmission paths according to the network transmission quality; when receiving the data traffic directed to the target server, the entry proxy device may select the target transmission path from the plurality of recorded alternative transmission paths according to the client identifier carried by the data traffic; and the entry proxy device may transmit the data traffic through the target transmission path. In such way, by selecting the plurality of alternative transmission paths, the selection condition of the transmission path may be relaxed, so the plurality of alternative transmission paths selected by different entry proxy devices of a same entry acceleration node in a short time period may have a high probability to be same; and then by locking the actually used transmission path through the client identifier, it may ensure that, for the data traffic of a same client, different entry proxy devices may select the transmission paths which meet the source IP address consistency requirement within the same alternative range, thereby ensuring the network transmission quality of the overall application acceleration network.

Based on the same technical concept, the embodiments of the present disclosure provide a device for transmitting data traffic. As shown in FIG. 3, the device may include:
a detection module 301, which is configured to detect network transmission quality of all transmission paths reaching a target server;
a first selection module 302, which is configured to select and record a plurality of alternative transmission paths from all transmission paths according to the network transmission quality;
a second selection module 303, which is configured to select a target transmission path from a plurality of recorded alternative transmission paths according to a client identifier carried by the data traffic when receiving the data traffic directed to the target server; and
a transmission module 304, which is configured to transmit the data traffic according to the target transmission path.

Optionally, the detection module 301 is specifically configured to:
detect network state parameters of each transmission path reaching the target server, where the network state parameters may at least include a transmission delay, a transmission packet loss probability, and a load and bandwidth usage rate of all node devices on the transmission path; and
determine the network transmission quality value of each transmission path according to the network state parameters, a preset threshold corresponding to each network state parameter and a quality impact weight corresponding to each network state parameter.

Optionally, the first selection module 302 is specifically configured to:
sort all transmission paths according to the network transmission quality values from high to low, and select the preset number of alternative transmission paths that are ranked first; or
determine transmission paths which have higher network transmission quality values than the preset quality threshold in all transmission paths as the alternative transmission paths; or
determine transmission paths, where a difference between the network transmission quality value and a maximum network transmission quality value in all transmission paths is within a preset deviation range, as the alternative transmission paths.

Optionally, the second selection module 303 is specifically configured to:
perform a hashing calculation on the client identifier carried by the data traffic to obtain a target hash value when receiving the data traffic directed to the target server; and
select the target transmission path from the plurality of alternative transmission paths according to the target hash value and the path identifier corresponding to each alternative transmission path.

Optionally, the second selection module 303 is specifically configured to:
perform a hashing calculation on the client identifier carried by the data traffic to obtain a target hash value when receiving the data traffic directed to the target server;
determine a target exit acceleration node according to the target hash value and the node identifier corresponding to the exit acceleration node on each alternative transmission path; and
select the target transmission path with the highest network transmission quality from all alternative transmission paths passing through the target exit acceleration node.

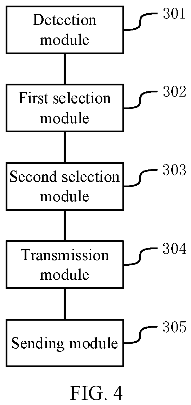

Optionally, as shown in FIG. 4, the device further includes:
a sending module 305, which is configured to, if the network transmission quality of the target transmission path is within a preset critical quality range, send the target path identifier of the target transmission path to other entry proxy devices of the entry acceleration node which the entry proxy device belongs to, such that the target transmission path may be selected according to the target path identifier when other proxy devices transmit the data traffic directed to the target server within the preset duration.

Optionally, the first selection module 302 is specifically configured to:
select the plurality of alternative transmission paths according to the network transmission quality of all transmission paths if the target server has a source IP address consistency requirement.

In one embodiment of the present disclosure, the entry proxy device may detect the network transmission quality of all transmission paths reaching the target server; the entry proxy device may select and record the plurality of alternative transmission paths from all transmission paths according to the network transmission quality; when receiving the data traffic directed to the target server, the entry proxy device may select the target transmission path from the plurality of recorded alternative transmission paths according to the client identifier carried by the data traffic; and the entry proxy device may transmit the data traffic through the target transmission path. In such way, by selecting the plurality of alternative transmission paths, the selection condition of the transmission path may be relaxed, so the plurality of alternative transmission paths selected by different entry proxy devices of a same entry acceleration node in a short time period may have a high probability to be same; and then by locking the actually used transmission path through the client identifier, it may ensure that, for the data traffic of a same client, different entry proxy devices may select the transmission paths which meet the source IP address consistency requirement within the same alternative range, thereby ensuring the network transmission quality of the overall application acceleration network.

It should be noted that, when the device for transmitting the data traffic provided by the above-mentioned embodiments transmits the data traffic, the division of each functional module may be used merely as an example for description. In practical applications, the above-mentioned function configuration may be completed by different functional modules as needed. That is, the internal structure of the device may be divided into different functional modules to complete all or part of the above-mentioned functions. Furthermore, the device for transmitting data traffic and the method for transmitting data traffic provided by the above-mentioned embodiments belong to a same concept, and the specific implementation process may be described in the embodiments of the method, which may not be described in detail herein.

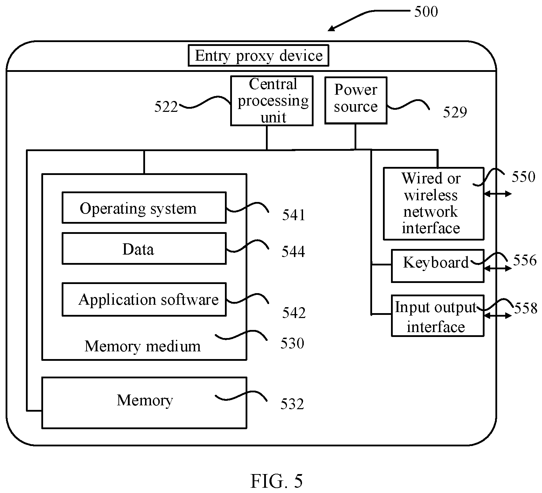

FIG. 5 illustrates a structural schematic of the entry proxy device according to embodiments of the present disclosure. The entry proxy device 500 may vary considerably depending on configuration or performance. The entry proxy device 500 may include one or more central processing units 522 (i.e., one or more processors), a memory 532, and one or more storage media 530 (i.e., one or more mass storage devices) storing application programs 542 or data 544. The memory 532 and the storage media 530 may be short-term memory or persistent memory. The programs stored on the storage media 530 may include one or more modules (not shown in FIG. 5), and each module may include a series of instruction operations in the entry proxy device 500. Furthermore, the central processing units 522 may be configured to communicate with the storage media 530 and perform the series of instruction operations in the storage media 530 on the entry proxy device 500.

The entry proxy device 500 may further include one or more power sources 529, one or more wired or wireless network interfaces 550, one or more input and output interfaces 558, one or more keyboards 556, and one or more operating systems 541 such as Windows Server, Mac OS X, Unix, Linux, FreeBSD, and the like.

The entry proxy device 500 may include memory, and one or more programs, where the one or more programs are stored in the memory, and instructions for performing the above-mentioned data traffic transmission, included in the one or more above-mentioned configured programs, may be executed by the one or more programs.

Those skilled in the art may understand that all or part of the steps of implementing the above-mentioned embodiments may be completed by hardware, and also be completed by instructing relevant hardware through the programs. The programs may be stored in a computer readable storage medium, and the above-mentioned storage media may be read-only memory, magnetic disks, optical disks and the like.

The above-mentioned descriptions are merely certain preferred embodiments of the present disclosure and are not intended to limit the present disclosure. Without departing from the spirit and principles of the present disclosure, any modifications, equivalent substitutions, and improvements, and the like should fall within the scope of the present disclosure.

## Claims

1. A method for transmitting data traffic, comprising:
detecting, by an entry proxy device, network transmission quality of all transmission paths reaching a target server;
selecting and recording, by the entry proxy device, a plurality of alternative transmission paths from the all transmission paths, according to the network transmission quality;
when receiving data traffic directed to the target server, selecting, by the entry proxy device, a target transmission path from a plurality of recorded transmission paths according to a client identifier carried by the data traffic; and
transmitting, by the entry proxy device, the data traffic through the target transmission path.

2. The method according to claim 1, wherein detecting the network transmission quality of the all transmission paths reaching the target server by the entry proxy device includes:
detecting, by the entry proxy device, network state parameters of each transmission path reaching the target server, wherein the network state parameters at least include a transmission delay, a transmission packet loss probability, and a load and bandwidth usage rate of all node devices on the transmission path; and
determining, by the entry proxy device, a network transmission quality value of each transmission path according to the network state parameters, a preset threshold corresponding to each network state parameter, and a quality impact weight corresponding to each network state parameter.

3. The method according to claim 2, wherein selecting the plurality of alternative transmission paths from the all transmission paths according to the network transmission quality includes:
sorting, by the entry proxy device, the all transmission paths according to network transmission quality values from high to low, and selecting, by the entry proxy device, a preset number of alternative transmission paths that are ranked first; or
determining, by the entry proxy device, transmission paths which have higher network transmission quality values than a preset quality threshold in the all transmission paths as the plurality of alternative transmission paths; or
determining, by the entry proxy device, transmission paths, wherein a difference between the network transmission quality value and a maximum network transmission quality value in the all transmission paths is within a preset deviation range, as the plurality of alternative transmission paths.

4. The method according to claim 1, wherein, when receiving the data traffic directed to the target server, selecting the target transmission path from the plurality of transmission paths according to the client identifier carried by the data traffic includes:
performing, by the entry proxy device, a hashing calculation on the client identifier carried by the data traffic to obtain a target hash value, when receiving the data traffic directed to the target server; and
selecting, by the entry proxy device, the target transmission path from the plurality of alternative transmission paths according to the target hash value and the path identifier corresponding to each alternative transmission path.

5. The method according to claim 1, wherein, when receiving the data traffic directed to the target server, selecting the target transmission path from the plurality of transmission paths according to the client identifier carried by the data traffic includes:
performing, by the entry proxy device, a hashing calculation on the client identifier carried by the data traffic to obtain a target hash value, when receiving the data traffic directed to the target server;
determining, by the entry proxy device, a target exit acceleration node according to the target hash value and a node identifier corresponding to an exit acceleration node on each alternative transmission path; and
selecting, by the entry proxy device, the target transmission path having a highest network transmission quality from all alternative transmission paths passing through the target exit acceleration node.

6. The method according to claim 1, wherein after selecting the target transmission path from the plurality of alternative transmission paths, the method further includes:
if the network transmission quality of the target transmission path is within a preset critical quality range, sending, by the entry proxy device, a target path identifier of the target transmission path to other entry proxy devices of the entry acceleration node that the entry proxy device belongs to, such that the target transmission path is selected according to the target path identifier when the other proxy devices transmit the data traffic directed to the target server within a preset duration.

7. The method according to claim 1, wherein selecting the plurality of alternative transmission paths from the all transmission paths according to the network transmission quality includes:
if the target server has a source IP address consistency requirement, selecting, by the entry proxy device, the plurality of alternative transmission paths from the all transmission paths according to the network transmission quality.

8. A device for transmitting data traffic, comprising:
a detection module, configured to detect network transmission quality of all transmission paths reaching a target server;
a first selection module, configured to select and record a plurality of alternative transmission paths from the all transmission paths according to the network transmission quality;
a second selection module, configured to select a target transmission path from a plurality of recorded alternative transmission paths according to a client identifier carried by the data traffic when receiving data traffic directed to the target server; and
a transmission module, configured to transmit the data traffic according to the target transmission path.

9. The device according to claim 8, wherein the detection module is specifically configured to:
detect network state parameters of each transmission path reaching the target server,
wherein the network state parameters at least include a transmission delay, a transmission packet loss probability, and a load and bandwidth usage rate of all node devices on the transmission path; and
determine a network transmission quality value of each transmission path according to the network state parameters, a preset threshold corresponding to each network state parameter, and a quality impact weight corresponding to each network state parameter.

10. The device according to claim 9, wherein the first selection module is specifically configured to:
sort the all transmission paths according to the network transmission quality values from high to low, and selecting a preset number of alternative transmission paths that are ranked first; or
determine transmission paths which have higher network transmission quality values than a preset quality threshold in the all transmission paths as the plurality of alternative transmission paths; or
determine transmission paths, wherein a difference between the network transmission quality value and a maximum network transmission quality value in the all transmission paths is within a preset deviation range, as the plurality of alternative transmission paths.

11. The device according to claim 8, wherein the second selection module is specifically configured to:
perform a hashing calculation on the client identifier carried by the data traffic to obtain a target hash value, when receiving the data traffic directed to the target server; and
select the target transmission path from the plurality of alternative transmission paths according to the target hash value and a path identifier corresponding to each alternative transmission path.

12. The device according to claim 8, wherein the second selection module is specifically configured to:
perform a hashing calculation on the client identifier carried by the data traffic to obtain a target hash value, when receiving the data traffic directed to the target server;
determine a target exit acceleration node according to the target hash value and a node identifier corresponding to an exit acceleration node on each alternative transmission path; and
select the target transmission path having a highest network transmission quality from all alternative transmission paths passing through the target exit acceleration node.

13. The device according to claim 8, wherein the device further includes:
a sending module, configured to, if the network transmission quality of the target transmission path is within a preset critical quality range, send a target path identifier of the target transmission path to other entry proxy devices of the entry acceleration node that the entry proxy device belongs to, such that the target transmission path is selected according to the target path identifier when the other proxy devices transmit the data traffic directed to the target server within a preset duration.

14. The device according to claim 8, wherein the first selection module is specifically configured to:
if the target server has a source IP address consistency requirement, select the plurality of alternative transmission paths from the all transmission paths according to the network transmission quality.

15. An entry proxy device, comprising:
the entry proxy device includes a processor and a memory, wherein the memory is configured to store at least one instruction, and at least one program segment, a code set or an instruction set; and the at least one instruction, the at least one program segment, the code set or the instruction set is loaded and executed by the processor to implement the method for transmitting data traffic according to any claims 1 to 7.

16. A computer readable storage medium, wherein:
the storage medium is configured to store at least one instruction, at least one program segment, a code set or an instruction set; and the at least one instruction, the at least one program segment, the code set or the instruction set is loaded and executed by a processor to implement the method for transmitting data traffic according to any claims 1 to 7.
